# EUROPÄISCHE PATENTANMELDUNG

(11) **EP 1 304 193 A2**
(43) Veröffentlichungstag der Anmeldung: **23.04.2003**
(21) Anmeldenummer: 02021611.5
(22) Anmeldetag: 27.09.2002
(51) Int. Cl.: B25J 9/16

(54) **Verfahren zum automatisierten Auflegen von Objekten auf einen Träger**

(30) Priorität: 10.10.2001 DE 10149855; 06.12.2001 DE 10160061
(71) Anmelder: imt robot AG, 70736 Fellbach (DE)
(72) Erfinder: Nagler, Peter, 70736 Fellbach (DE)
(74) Vertreter: Wasmuth, Rolf, Dipl.-Ing.

(57) **Zusammenfassung**

Die Erfindung betrifft ein Verfahren zum automatisierten Auflegen von Objekten (1, 2) auf einen Träger (3), wobei der Träger (3) und die Objekte (1, 2) auf einem Zuführband (4) liegen und einer Erfassungseinrichtung (5) zugeführt werden, deren Ausgangssignale als Erfassungsdaten einer Steuereinheit (7) übermittelt werden. Anhand der Erfassungsdaten erkennt und unterscheidet die Steuereinheit (7) die Objekte (1, 2) sowie die Träger (3) voneinander, wobei die Steuereinheit (7) nach Erkennung und Unterscheidung der Objekte (1, 2) und des Trägers (3) nach vorgebbaren Kriterien einen an die Steuereinheit (7) angeschlossenen Greifer (9, 19, 29, 39) ansteuert und einen Auflegevorgang durchführt.

## Beschreibung

Die Erfindung betrifft ein Verfahren zum automatisierten Auflegen von Objekten auf einen Träger.

Waren werden an den Endverbraucher regelmäßig in Verpackungen angeboten, wobei in den Verpackungen Objekte gleicher oder unterschiedlicher Art enthalten sein können. So werden in der Lebensmittelindustrie z. B. Gebäckpackungen mit gleichen oder verschiedenen Gebäcksorten angeboten oder auch Süßwaren wie z. B. Pralinenmischungen oder dgl. bereitgestellt. Die Bestückung der Packungen mit gleichen oder unterschiedlichen Objekten wird meist in Handarbeit ausgeführt; es wurden auch schon Einlegeroboter vorgeschlagen, welche die Handarbeit übernehmen.

Werden zum Verpacken von gleichen oder unterschiedlichen Objekten auf Trägern Roboter eingesetzt, so muß eine hohe Leistungsfähigkeit zum Erreichen kürzester Taktzeiten erzielbar sein.

Der Erfindung liegt die Aufgabe zugrunde, ein Verfahren zum automatisierten Legen von Objekten auf einen Träger anzugeben, das bei minimalem Maschinenbedarf eine hohe Legeleistung bei schonendem Handling der Objekte gewährleistet.

Die Aufgabe wird nach den Merkmalen des Anspruchs 1 gelöst.

Zunächst werden die zu verpackenden Objekte gleicher oder unterschiedlicher Art zusammen mit dem Träger, z. B. einer Packung, einem Tray, einem Pizzaboden, einem Tortenboden oder dgl. auf ein Zuführband aufgelegt, wobei zur Ausführung des Verfahrens die Anordnung auf dem Zuführband geordnet, teilweise geordnet oder auch zufällig sein kann. Die z.B. zufällige Ordnung der Objekte und der Träger auf dem Zuführband wird von einer Erfassungseinrichtung erfaßt, deren Ausgangssignale als Erfassungsdaten einer Steuereinheit übermittelt werden. Die Steuereinheit wird anhand der Erfassungsdaten die Objekte sowie die Träger erkennen, voneinander unterscheiden und nach Erkennung und Unterscheidung der Objekte durch einen an die Steuereinheit angeschlossenen Greifer die Objekte nach vorgebbaren Kriterien auf die Träger auflegen.

In besonderer Ausgestaltung der Erfindung wird die Steuereinheit vor Ausführung eines Legevorgangs durch einen Greifer eine interne Simulation starten, mit der virtuell der Legevorgang eines Objektes auf den Träger durch einen an die Steuereinheit angeschlossenen Greifer nachgebildet wird. Die durchlaufenen Simulationen werden ausgewertet und anhand vorgebbarer Kriterien eine der Simulationen als für einen optimalen Legevorgang geeignet ausgewählt. Dann wird der an die Steuereinheit angeschlossene Greifer entsprechend der ausgewählten Simulation angesteuert, um das in einer bestimmten Lage liegende Objekt zu greifen und auf von den äußeren Gegebenheiten geeignetem Weg rasch, aber schonend auf den Träger abzulegen.

Sind an die Steuereinheit mehrere Greifer angeschlossen, wird mittels der Simulation auch ermittelt, welcher einzelne Greifer von den in Laufrichtung des Zuführbandes hintereinanderliegenden Greifern für den gewünschten Auflegevorgang der geeignete ist.

Die Simulation kann in einer einfachen Weise als Boolsche Verknüpfung vorgesehen sein; vorzugsweise erfolgt die Simulation nach einem geeigneten Algorithmus, so daß nicht nur produktspezifische Parameter und/oder konstruktive Parameter des Greifers in die Simulation eingehen, sondern vorzugsweise auch stellungsabhängige und/oder bewegungsabhängige Parameter des Greifers berücksichtigt werden können. Hierzu ist die Steuereinheit zweckmäßig als Recheneinheit mit einem entsprechend leistungsfähigen Mikroprozessor ausgerüstet. Zur Bildung eines Datenwissens können auch neuronale und/oder Fuzzi-Logic-Ansätze in die Simulationen eingehen.

Eine präzise Erkennung von Objekten und auch der Träger ist insbesondere dann gewährleistet, wenn die Steuereinheit die Objekte anhand eines Vergleiches ihrer Erfassungsdaten mit abgespeicherten objektspezifischen Grunddaten erkennt und unterscheidet. So können von der Steuereinheit in einem Speicher eine Vielzahl von Formen und Mustern als Datenpool abgelegt werden. Die Vorrichtung ist so ohne große Umrüstarbeiten für eine Vielzahl unterschiedlichster Objekte und Träger geeignet. Sie kann zum Einlegen von Süßwaren wie Pralinen oder Gebäck in Verpackungen ebenso genutzt werden, wie zur Sortimentszusammenstellung von zum Beispiel Schrauben oder Dübeln oder auch zum Belegen von Pizzaböden, Tortenböden, Sandwiches, Hamburgern oder dgl..

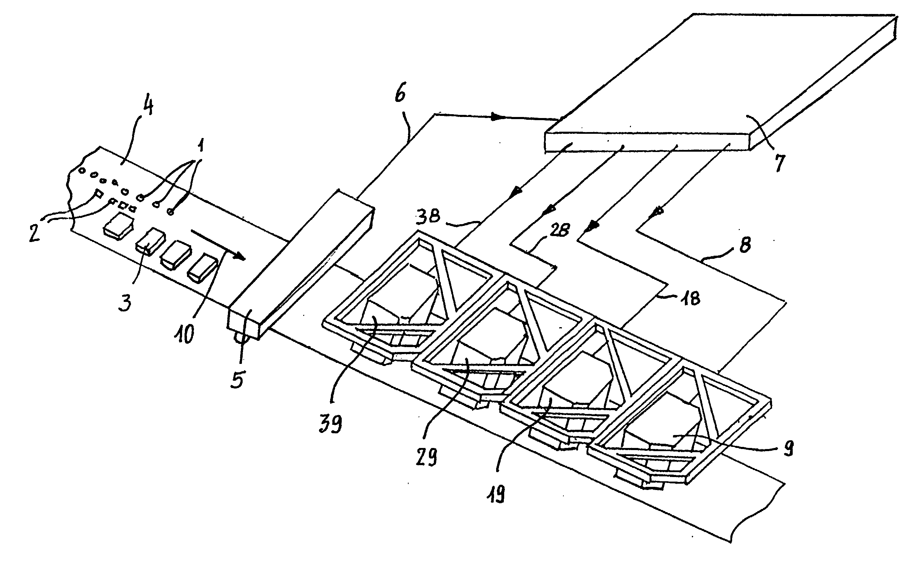

Weitere Merkmale der Erfindung ergeben sich aus den weiteren Ansprüchen, der Beschreibung und der Zeichnung, in der eine zur Durchführung des Verfahrens geeignete Vorrichtung wiedergegeben ist.

In der Figur ist schematisch die Vorrichtung zur Durchführung des erfindungsgemäßen Verfahrens zum automatisierten Auflegen von Objekten auf Trägern wiedergegeben. Die Vorrichtung besteht im wesentlichen aus einem in Pfeilrichtung 10 laufenden Zuführband 4, auf dem sowohl eine Vielzahl von Trägern 3 wie Packungen, Trays, Pizza- oder Tortenböden und dgl. als auch mehrere auf die Träger 3 aufzulegenden Objekte 1 und 2 aufgelegt werden. Die Objekte 1 und 2 und/oder die Träger 3 können geordnet, teilweise geordnet oder auch in zufälliger Ordnung auf das Zuführband 4 positioniert werden; zur Erhöhung der Leistung der Vorrichtung können grob vorbestimmte Lagen sowohl der Objekte wie der Träger zweckmäßig sein.

Die Objekte können unterschiedlich sein, vorzugsweise unterschiedliche geometrische Gestalt und/oder Beschaffenheit haben. So können die Objekte Süßwaren (Pralinen, Gebäck etc.), Garnierstücke (Schokolinsen, Figuren etc.), Aufschnitt (Käse, Wurst, Schinken), Gemüse (Paprika, Pilze) oder Obst sein. Auch können die Objekte technische Bauteile sein, die für eine Montage vorsortiert werden müssen. So können zum Beispiel die Kettenglieder technischer Ketten zu ordnen sein oder einzelne Bauteile einer technisch zusammenzufügenden Baugruppe. Im gezeigten Ausführungsbeispiel sind erste Objekte 1 von runder Gestalt auf dem Zuführband 4 aufgelegt und zweite Objekte 2 in eckiger Gestalt. In Draufsicht sind die Objekte 1 kreisförmig und die Objekte 2 rechteckig bis quadratisch.

Die Objekte 1, 2 werden zusammen mit den auf dem Zuführband 4 transportierten Trägern 3 einer Erfassungseinrichtung 5 zugeführt, die sich quer oberhalb des Zuführbandes 4 über dessen Breite erstreckt. Die Erfassungseinrichtung 5 kann Tastelemente zur mechanischen Lage- und Objekterkennung haben; im gezeigten Ausführungsbeispiel ist die Erfassungseinrichtung als optische Erfassungseinrichtung ausgebildet, z. B. eine CCD-Kamera oder dgl..

Die Ausgangssignale der Erfassungseinrichtung 5 werden über eine Datenleitung 6 als Erfassungsdaten einer Steuereinheit 7 zugeführt, welche die Erfassungsdaten auswertet. Dies kann in einfacher Weise durch eine Boolsche Verknüpfung der Erfassungsdaten erfolgen. Bevorzugt erkennt die Steuereinheit die Objekte 1, 2 und die Aufnahmeeinheiten 3 anhand eines Vergleiches der Erfassungsdaten mit abgespeicherten, objektspezifischen Grunddaten. Nach Erkennung der Träger 3 und der unterschiedlichen Objekte 1, 2 stehen der Steuereinheit 7 alle notwendigen Informationen zur Verfügung, um über an die Steuereinheit 7 angeschlossene Greifer 9, 19, 29 und 39, die als Roboter ausgebildet sind, die Objekte 1, 2 in einer gewünschten Art und Reihenfolge auf den Träger 3 abzulegen. Hierzu werden die Greifer 9, 19, 29, 39 über entsprechende Steuerleitungen 8, 18, 28 und 38 von der Steuereinheit 7 zum Ausführen des gewünschten Legevorgangs angesteuert.

In bevorzugter Ausführungsform der Erfindung ist die Steuereinheit 7 als Recheneinheit ausgebildet und führt vor Ausführung eines Legevorgangs eine Simulation aus, welche als einfache Boolsche Verknüpfung vorgesehen sein kann. In besonderer Ausgestaltung der Erfindung erfolgt die Simulation nach einem Algorithmus, der insbesondere produktspezifische Parameter und/oder konstruktive Parameter des Greifers, vorzugsweise auch stellungsabhängige und/oder bewegungsabhängige Parameter des Greifers verarbeitet. Im Rahmen der Simulation wird virtuell der Legevorgang eines Objektes 1, 2 auf den Träger 3 innerhalb der Steuereinheit nachgebildet. Jedes Simulationsergebnis wird anhand vorgebbarer Kriterien ausgewertet, um dann den Legevorgang entsprechend einer aus den durchgeführten Simulationen ausgewählten Vorgang durchzuführen. Der ausgewählte Vorgang ist von der Steuereinheit 7 anhand der vorgegebenen Kriterien als für einen optimalen Legevorgang geeignet aus der Vielzahl von Simulationen bestimmt worden.

Nach dem erfindungsgemäßen Verfahren wird somit vor dem Ausführen des Legevorgangs über die Erfassungseinrichtung sowohl eine Erkennung des Objektes 1, 2 wie des Trägers 3 vorgenommen und deren Lage in der Ebene auf dem Zuführband 4 erfaßt. Die über die Datenleitung 6 der Recheneinheit 7 mitgeteilten Erfassungsdaten geben somit sowohl eine Information über das Objekt 1, 2 bzw. den Träger selbst, so daß das Objekt und der Träger als solche erkannt werden kann; gleichzeitig können dem erkannten Objekt Lagedaten zugeordnet werden, anhand derer der Start- und Zielpunkt einer Greifbewegung und Ablagebewegung einer der Greifer 9, 19, 29, 39 präzise ausgeführt werden können. Über die Simulation wird dabei ein Vorgang mit optimiertem Bewegungsablauf ermittelt, der unter Berücksichtigung der technischen Möglichkeiten der angeschlossenen Greifer 9, 19, 29, 39 eine schonende Bewegung des Objektes auf kurzem Weg vom Start zum Zielort gewährleistet.

Mit dem erfindungsgemäßen Verfahren ist insbesondere auch ein dreidimensionales Legen der Objekte 1, 2 auf oder in einen Träger 3 möglich, so daß zum Beispiel Packungen mit mehreren Schichten der Objekte 1, 2 zusammengestellt werden können. Dabei können die Objekte in vorgebbarer Reihenfolge z. B. nach einem Legealgorithmus auf den Träger 3 aufgelegt werden.

Das Verfahren ist grundsätzlich mit einer einfachen Erfassungseinrichtung 5, einer Steuereinheit 7 und einem Greifer 9 durchführbar. Bevorzugt ist die Steuereinheit 7 als Rechner ausgeführt, der eine Vielzahl von Parametern bei der dem tatsächlichen Legevorgang vorgeschalteten Simulation verarbeiten kann. Dadurch können auch Träger beliebiger Form mit beliebiger Anzahl gleicher oder unterschiedlicher Objekte einoder mehrlagig bei hoher Verarbeitungsgeschwindigkeit bestückt werden. Dabei kann der Rechner unter Zuhilfenahme neuronaler Ansätze und/oder Fuzzy-Logic-Ansätzen lernfähig ausgebildet sein, so daß durchzuführende Vergleiche und Entscheidungen auf wissensbasierter Ebene erfolgen können. Das System selbst optimiert den Legevorgang anhand laufend neu gewonnener sowie abgespeicherter Daten.

Die Steuereinheit 7 ist über die Steuerleitungen 8, 18, 28 und 38 mit mehreren Greifern 9, 19, 29, 39 verbunden, wobei vorteilhaft jedem Objekt gleicher Art, z. B. gleicher geometrischer Gestalt, ein bestimmter Greifer zugeordnet werden kann. Die Leistungsfähigkeit der Anlage kann damit gesteigert werden.

Mit dem erfindungsgemäßen Verfahren sind nicht nur monotone, regelmäßig wiederkehrende Legevorgänge ausführbar, wie sie zum Beispiel beim Zusammenstellen von Verkaufsverpackungen gegeben sind. Vorteilhaft können intelligente Legevorgänge abgewickelt werden, wie zum Beispiel das Garnieren einer Torte, das Belegen eines Pizzabodens, das Zusammenstellen oder Belegen eines Sandwichs, eines Hamburgers oder ähnlich anspruchsvoller Aufgaben. Nicht nur im Lebensmittelbereich ist das Verfahren einsetzbar, sondern auch in anderen Gebieten des produzierenden Gewerbes. So lassen sich zum Beispiel auch Bausätze mit einer erheblichen Anzahl unterschiedlicher Elemente durch das Verfahren bei hoher Gesamtleistung fehlerfrei zusammenstellen. So können die einzelnen Kettenglieder einer technischen Kette, wie sie zum Beispiel in modernen Automatikgetrieben von Kraftfahrzeugen eingesetzt werden, mit dem erfindungsgemäßen Verfahren vorsortiert und in eine für die Montage günstige Reihenfolge gelegt werden. Da es sich um eine Vielzahl unterschiedlicher Kettenglieder (zum Beispiel 30 verschiedene Kettenglieder) handelt, beschleunigt ein robotergesteuertes Vorsortieren den Produktionsvorgang erheblich.

## Patentansprüche

1. Verfahren zum automatisierten Auflegen von Objekten (1, 2) auf einen Träger (3), wobei der Träger (3) und die Objekte (1, 2) auf einem Zuführband (4) liegen und einer Erfassungseinrichtung (5) zugeführt werden, deren Ausgangssignale als Erfassungsdaten einer Steuereinheit (7) übermittelt werden, und die Steuereinheit (7) anhand der Erfassungsdaten die Objekte (1, 2) sowie die Träger (3) erkennt und voneinander unterscheidet, wobei die Steuereinheit (7) nach Erkennung und Unterscheidung der Objekte (1, 2) und des Trägers (3) nach vorgebbaren Kriterien einen an die Steuereinheit (7) angeschlossenen Greifer (9, 19, 29, 39) ansteuert und einen Auflegevorgang durchführt.

2. Verfahren nach Anspruch 1,
**dadurch gekennzeichnet, daß** die Steuereinheit (7) vor Ausführung eines Legevorgangs eine Simulation startet, mit der virtuell der Legevorgang eines Objektes (1, 2) auf den Träger (2) durch einen an die Steuereinheit (7) angeschlossenen Greifer (9, 19, 29, 39) nachgebildet wird, und daß die Steuereinheit (7) zur Ausführung des Legevorgangs den Greifer (9, 19, 29, 39) entsprechend einem aus den durchgeführten Simulationen ausgewählten Vorgang ansteuert, der von der Steuereinheit (7) anhand vorgebbarer Kriterien als für einen optimalen Legevorgang geeignet bestimmt wurde.

3. Verfahren nach Anspruch 2,
**dadurch gekennzeichnet, daß** die Simulation nach einer Boolschen Verknüpfung, insbesondere nach einem Algorithmus abläuft.

4. Verfahren nach Anspruch 2 oder 3,
**dadurch gekennzeichnet, daß** bei der Simulation neuronale Ansätze und/oder Fuzzy-Logic-Ansätze verarbeitet werden.

5. Verfahren nach einem der Ansprüche 2 bis 4,
**dadurch gekennzeichnet, daß** die Steuereinheit (7) auf aus den Simulationen und Legevorgängen aufgebautem Datenwissen eine Entscheidung ausführt.

6. Verfahren nach einem der Ansprüche 2 bis 5,
**dadurch gekennzeichnet, daß** die Simulation produktspezifische Parameter und/oder konstruktive Parameter des Greifers, vorzugsweise auch stellungsabhängige und/oder bewegungsabhängige Parameter des Greifers verarbeitet.

7. Verfahren nach einem der Ansprüche 1 bis 6,
**dadurch gekennzeichnet, daß** die Steuereinheit (7) als Recheneinheit mit einem Mikroprozessor ausgebildet ist.

8. Verfahren nach einem der Ansprüche 1 bis 7,
**dadurch gekennzeichnet, daß** die Steuereinheit (7) die Objekte (1, 2) anhand eines Vergleiches der Erfassungsdaten mit abgespeicherten, objektspezifischen Grunddaten erkennt und unterscheidet.

9. Verfahren nach einem der Ansprüche 1 bis 8,
**dadurch gekennzeichnet, daß** die Erfassungseinrichtung (5) als optische Erfassungseinrichtung ausgebildet ist.

10. Verfahren nach einem der Ansprüche 1 bis 9,
**dadurch gekennzeichnet, daß** die Objekte (1, 2) auf dem Träger (3) dreidimensional abgelegt sind.

11. Verfahren nach einem der Ansprüche 1 bis 10,
**dadurch gekennzeichnet, daß** die Objekte (1, 2) unterschiedlich ausgebildet sind, vorzugsweise unterschiedlich geometrische Gestalt und/oder Beschaffenheit haben.

12. Verfahren nach einem der Ansprüche 1 bis 11,
**dadurch gekennzeichnet, daß** die Objekte (1, 2) in vorgebbarer Reihenfolge, insbesondere nach einem Einlegealgorithmus auf den Träger (3) auflegbar sind.

13. Verfahren nach einem der Ansprüche 1 bis 12,
**dadurch gekennzeichnet, daß** die Steuereinheit (7) mehrere Greifer (9, 19, 29, 39) ansteuert.

14. Verfahren nach Anspruch 13,
**dadurch gekennzeichnet, daß** jedem gleichen Objekt (1, 2) ein bestimmter Greifer (9, 19, 29, 39) zugeordnet ist.

15. Verfahren nach einem der Ansprüche 1 bis 14,
**dadurch gekennzeichnet, daß** der Träger (3) eine Schale, eine Verpackung, ein Teigboden, ein Skid oder dgl. ist.
